# EUROPÄISCHE PATENTSCHRIFT

(11) **EP 0 614 841 B1**
(45) Veröffentlichungstag und Bekanntmachung des Hinweises auf die Patenterteilung: **01.07.1998**
(21) Anmeldenummer: 94810097.9
(22) Anmeldetag: 18.02.1994
(51) Int. Cl.: B65H 45/30

(54) **Verfahren und Vorrichtung zum Falzen von Faltkanten an Papierprodukten**
Method and device for folding fold lines on paper products
Procédé et dispositif pour plier des lignes de pliage sur des produits de papier

(30) Priorität: 10.03.1993 CH 714/93
(43) Veröffentlichungstag der Anmeldung: 14.09.1994
(73) Patentinhaber: Ferag AG, 8340 Hinwil (CH)
(72) Erfinder: Reist, Walter, CH-8340 Hinwil (CH)
(74) Vertreter: Frei, Alexandra Sarah

(56) Entgegenhaltungen:
- EP-A- 0 207 271
- DE-A- 3 517 775
- DE-A- 4 039 997
- DE-A- 4 039 998
- US-A- 3 931 963

## Beschreibung

Die Erfindung liegt auf dem Gebiete der Weiterverarbeitung von Produkten aus Papier, insbesondere von Druckprodukten und betrifft ein Verfahren und eine Vorrichtung gemäss den Oberbegriffen der entsprechenden unabhängigen Patentansprüche.

Es besteht ein Bedürfnis, Faltkanten an Produkten aus Papier, insbesondere Bunde von gefalteten Druckprodukten wie beispielsweise Zeitungen oder Zeitschriften, zu falzen, das heisst schärfer zu machen, um den Dickenunterschied zwischen dem Bereich der Faltkante und den Bereichen der anderen Kanten (ohne Falt) zu vermindern und damit Produkte herzustellen, die einfacher weiterzuverarbeiten sind, aus denen also beispielsweise einfacher stabile Stapel oder Lagen erstellt werden können. Gemäss dem Stand der Technik werden beispielsweise die in Form eines Schuppenstromes von einer Rotationspresse ausgelegten, gefalteten Druckprodukte für eine Pressung der meist vorlaufenden Faltkante (Bund) zwischen einem oder mehreren, quer zur Bewegungsrichtung des Schuppenstromes angeordneten Presswalzenpaaren durchgeführt, wobei die beiden Walzen eines Paares mit einer Presskraft gegeneinander gepresst werden und die Faltkanten sehr kurz und intensiv gepresst werden. Es zeigt sich, dass auch bei der Anwendung sehr hoher Presskräfte (beispielsweise in der Grössenordnung von ∼ 1 bis ∼ 2 KH (von 100 bis 200 kp)) mit derartigen Presswalzenpaaren Faltkanten entstehen, die sich teilweise wieder erholen, das heisst, die immer noch einen beträchtlichen Dickenunterschied zwischen dem Bereich der gepressten Faltkante und anderen Bereichen des Druckpoduktes bedingen. Die Methode der Faltpressung mit Quer-Presswalzenpaaren ist naheliegend an Druckprodukten in Schuppenstromformation, weshalb die Walzen üblicherweise unmittelbar im Ausgangsbereich der Rotationspresse angeordnet sind, wo die Druckprodukte noch sehr frisch sind. Aus diesem Grunde können keine bedeutend höheren Presskräfte zur Pressung der Faltkanten angewendet werden, weil die Qualität der Druckprodukte durch Verkleben oder Verschmieren der inneren Seiten dadurch beeinträchtigt werden könnte.

Es sind auch andere Methoden bekannt, mit denen mit hohen Presskräften die Faltkanten kurz gepresst werden und die alle nur beschränkt scharfe Kanten ergeben und deshalb nur beschränkt anwendbar sind.

Um die genannten Nachteile zu umgehen, wurde, wie in der europäischen Patentschrift Nr. 0207271 derselben Anmelderin beschrieben, auch eine Methode entwickelt, nach der die Faltkante von gefalteten Druckprodukten während einer längeren Zeit zwischen zwei Pressbacken gepresst wird. Damit diese Methode auch an kontinuierlich geförderten Produkten angewendet werden kann, bewegen sich die Pressbackenpaare über eine Strecke mit den hängend geförderten Druckprodukten mit. Es zeigt sich, dass auch nach dieser Methode nur mit sehr hohen Presskräften eine Faltqualität zu erreichen ist, die höheren Ansprüchen genügen kann.

Es ist auch bekannt, beispielsweise durch die Publikation US-3931963, die Faltkante von Produkten zwischen zwei Presszylindern hindurch zu bewegen, wobei die Presszylinder einander gegenüberliegend auf der Faltkante abgerollt werden und dadurch die Faltkante nachgefaltet oder gefalzt wird.

Es ist deshalb die Aufgabe der Erfindung, ein Verfahren und eine Vorrichtung aufzuzeigen, mit denen Faltkanten an Produkten aus Papier, insbesondere an Druckprodukten gefalzt, das heisst schärfer gemacht werden können, derart, dass mit geringeren Kräften schärfere Falze hergestellt werden können als dies mit den Methoden des Standes der Technik möglich ist. Das Verfahren soll insbesondere auch anwendbar sein an kontinuierlich geförderten Produkten, wobei ein Förderstrom der Produkte durch die Vorrichtung zum Falzen der Faltkanten geführt wird.

Diese Aufgabe wird gelöst durch das Verfahren und die Vorrichtung, wie sie durch die Merkmale der Patentansprüche definiert sind.

Nach dem erfindungsgemässen Verfahren wird auf jeder Seite der zu falzenden Faltkante ein Falzwerkzeug positioniert, derart, dass eine schmale Stelle (Falzstelle) der Faltkante zwischen den einander gegenüberliegenden Falzflächen der Werkzeuge liegt, wobei die Falzflächen der Werkzeuge im Bereiche der Faltkante am Druckprodukt nur anliegen oder mit einer Presskraft gegeneinander gedrückt werden. Mindestens eines der Falzwerkzeuge weist dabei eine derart gekrümmte Falzfläche auf, dass diese im wesentlichen entlang einer Falzlinie am Druckprodukt anliegt, wobei diese Falzlinie in einem Winkel zur Faltkante angeordnet ist. Die beiden Falzwerkzeuge und ihre Falzflächen sind vorteilhafterweise relativ zum Produkt derart angeordnet, dass die Faltkante um die Falzlinie des einen Falzwerkzeuges gekrümmt wird. Die Faltkante oder ein vorgegebener Teil davon wird nun gefalzt, indem die Falzstelle entlang der Faltkante bewegt wird, dadurch, dass mindestens eines der Falzwerkzeuge sich entlang der Faltkante bewegt. Nach dem erfindungsgemässen Verfahren ist es möglich, mit sehr kleinen Kräften (beispielsweise ∼ 30 bis ∼ 50 M (3 bis 5 kp)) hohe Falzqualitäten zu erreichen.

Es ist auch möglich, die Faltkante zu falzen, indem sie zwischen den Falzwerkzeugen nur gepresst und nicht gekrümmt wird. Für kontinuierlich geförderte Druckprodukte werden die Falzwerkzeuge über eine Falzstrecke mit den Druckprodukten mitgeführt.

Anhand der folgenden Figuren sollen nun das erfindungsgemässe Verfahren und beispielhafte Ausführungsformen der erfindungsgemässen Vorrichtung detailliert beschrieben werden. Dabei zeigen:
- **Figuren 1a bis 1c**: perspektivische Ansichten eines Druckproduktes, dessen Faltkante nach dem erfindungsgemässen Falzverfahren gefalzt wird;
- **Figuren 2a bis 2d**: verschiedene Ausführungsformen von Paaren von Falzwerkzeugen (Blickwinkel gegen die zu falzende Faltkante);
- **Figuren 3a bis 3c**: Angriffstellen von Haltemitteln und Falzwerkzeugen an verschiedenen Druckprodukten;
- **Figur 4**: eine Draufsicht auf eine beispielhafte Ausführungsform der erfindungsgemässen Vorrichtung zum Falzen einer Faltkante an kontinuierlich und hängend geförderten Produkten;
- **Figur 5**: eine Seitenansicht der Vorrichtung gemäss Figur 4;
- **Figur 6**: ein Detail der Vorrichtung gemäss Figur 4;
- **Figur 7**: eine beispielhafte Anordnung der Vorrichtung gemäss Figur 4 in einer Förderstrecke.

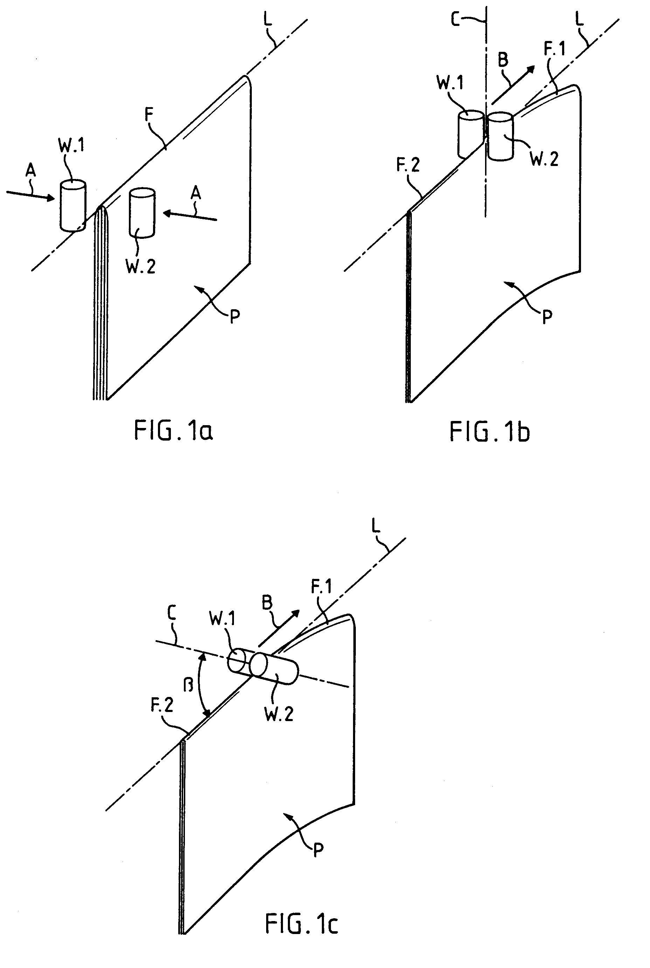

**Figuren 1a bis 1c** zeigen in perspektivischer Darstellung ein Druckprodukt P mit einer zu falzenden Faltkante F, die auf einer Linie L angeordnet ist. Es handelt sich dabei beispielsweise um eine Mehrzahl ineinander liegender, mittig gefalteter Bogen. Nach dem erfindungsgemässen Verfahren wird nun eine Stelle der Faltkante F, beispielsweise ihr eines Ende, zwischen zwei Falzwerkzeuge W.1 und W.2 positioniert, indem diese Werkzeuge beispielsweise beidseitig der Faltkante angeordnet sind und beispielsweise senkrecht zu dieser (Pfeile A) gegeneinander bewegt werden (Figur 1a), bis sie beidseitig der Faltkante mit ihren parallel zueinander angeordneten Falzflächen an einer Falzstelle am Produkt anliegen, wobei sie zusätzlich gegeneinander gepresst werden können. Dann werden die Falzwerkzeuge parallel zur Linie L (Pfeil B) entlang der Faltkante bewegt (Figur 1b).

Die Falzwerkzeuge (W.1, W.2) sind beispielsweise als zwei frei oder angetrieben um ihre Achse drehbare Zylinder ausgebildet, die entlang einer Linie C (Falzlinie) am Produkt anliegen. Diese Falzlinie C kann, wie in der Figur 1b dargestellt senkrecht zur Faltkante (bzw. Linie L) gerichtet sein. Sie kann aber auch, wie in der Figur 1c dargestellt, mit der Faltkante (bzw. Linie L) einen spitzen Winkel β bilden, vorteilhafterweise derart, dass das auf dem Produkt liegende Ende der Falzlinie in Bewegungsrichtung B vorlaufend ist. Derart entsteht bei der Bewegung der Falzwerkzeuge in Richtung B eine Kraft, die aus dem Produkt gegen die Faltkante gerichtet ist und die die Faltkante während dem Falzvorgang nach aussen zieht, was die Falzqualität erhöht.

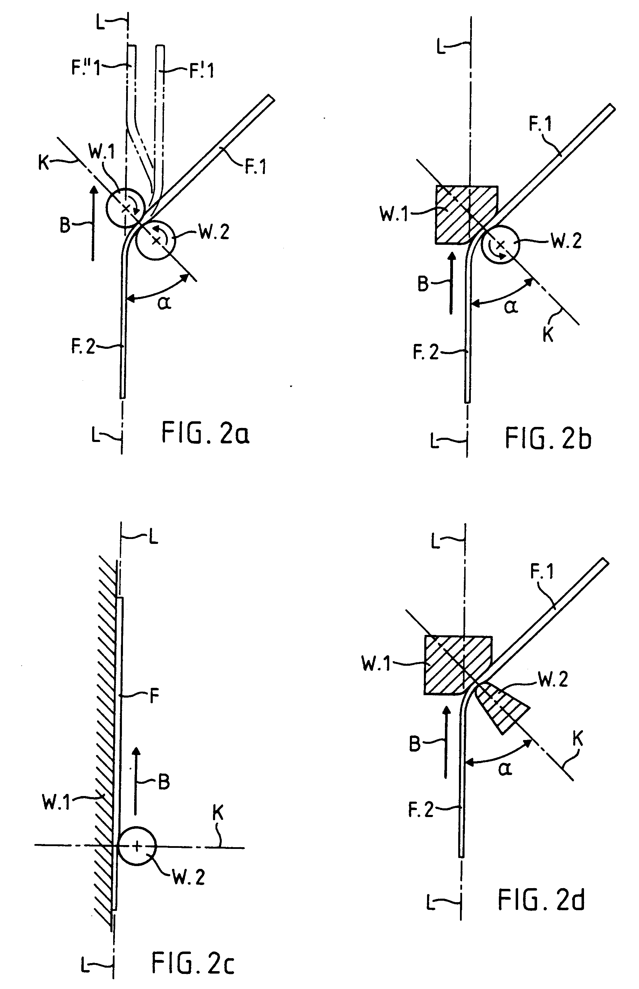

Die Falzflächen der Falzwerkzeuge sind, wie im Zusammenhang mit den Figuren 2a bis 2d noch detailliert beschrieben werden soll, derart angeordnet, dass die Faltkante an der Falzstelle von der Linie L weg gekrümmt wird, derart, dass beispielsweise wie dargestellt (Figuren 1b und 1c) der noch nicht gefalzte Teil F.1 der Faltkante von der Linie L weg bewegt wird, während der gefalzte Teil F.2 der Faltkante auf der Linie L liegt.

Die Beschreibung des Falzvorganges mit Hilfe der Linien L und C ist theoretisch und bezieht sich eigentlich auf ein Produkt, das senkrecht zu seinen Hauptflächen keine Ausdehnung also keine reale Dicke hat. Im realen Falle hat natürlich das Produkt mit der zu faltenden Faltkante eine endliche Dicke, derart, dass auf jeder Seite des Produktes eine Falzlinie C entsteht, zwischen denen die theoretische Linie L verläuft, ohne dass Schnittpunkte entstehen. Zusätzlich hat bei einem realen Produkt, das aus ineinander gefalteten Lagen besteht, die Faltkante (Linie L) auch eine Ausdehnung gegen die Blume des Produktes hin, das heisst eigentlich hat jeder Bogen eine eigene Linie L, wobei die Schar der parallel verlaufenden Linien L der einzelnen Bogen im wesentlichen in einer mittig im Produkt angeordneten Ebene liegen. Um die Beschreibung nicht unnötig zu komplizieren, wird ihr das theoretische Produkt ohne endliche Dicke zugrunde gelegt, das heisst es wird von einer Linie L gesprochen, obschon diese für ein reales Produkt einen Bereich darstellt, der sowohl durch die Dicke des Produktes als auch durch die aufeinanderliegenden Einzelfalte auch eine Querausdehnung hat. Die beschriebenen Schnittpunkte mit der theoretischen Linie L sind real Schnittpunkte mit Parallelen zur theoretischen Linie L im genannten Bereich der Faltkante.

Die Faltkante falzend durch örtliche Krümmung und/oder Pressung wird beispielsweise die ganze Faltkante von den Falzwerkzeugen abgefahren. Die Falzwerkzeuge üben dabei (wenn es nicht angetriebene Falzwerkzeuge sind) durch ihre Bewegung entlang der Faltkante eine Zugkraft auf das Druckprodukt aus, weshalb dieses während dem Falzen durch nicht dargestellte Haltemittel festgehalten werden muss. Je nach Flexibilität des Druckproduktes, je nach Ausgestaltung der Falzwerkzeuge und der Haltemittel und je nach Art und Weise, in der das Druckprodukt festgehalten wird, wird sich die Faltkante um das eine der Falzwerkzeuge krümmen, derart, dass wie in den Figuren 1b und 1c dargestellt der noch nicht gefalzte Teil einen Winkel zum bereits gefalzten Teil bildet, oder aber derart, dass der noch nicht gefalzte Teil gegenüber dem bereits gefalzten Teil nur leicht verschoben ist oder nebst einer weiteren Krümmung im wesentlichen ebenfalls auf der Linie L liegt (siehe auch Figur 2a).

Es ist auch vorstellbar, dass anstelle von sich bewegenden Falzwerkzeugen, die die Faltkante eines festgehaltenen Produktes falzen, stationäre Paare von Falzwerkzeugen vorgesehen sind, zwischen denen das Produkt mit Hilfe der Haltemittel beispielsweise durchgezogen wird.

**Figuren 2a bis 2d** zeigen nun mit Blickwinkel auf die zu falzende Faltkante eines Druckproduktes verschiedene Ausführungsformen von Paaren von Falzwerkzeugen W.1 und W.2. Die Falzflächen der Falzwerkzeuge, das heisst die während dem Falzvorgang beidseitig auf die Faltkante des Produktes wirkenden Flächen, durch die auch eine Presskraft auf das Produkt ausgeübt werden kann, sind derart ausgestaltet, dass diese Wirkung auf einen sehr schmalen Bereich (Falzstelle) der Falzkante ausgeübt wird. Dazu ist vorteilhafterweise mindestens die eine der Falzflächen derart gekrümmt, dass sie im wesentlichen entlang einer Linie (Linie C, Figuren 1b und 1c) auf das Produkt wirkt. Es sind aber auch schmale, ebene Falzflächen denkbar. Ferner sind die Falzflächen, wie bereits erwähnt, vorteilhafterweise derart relativ zueinander angeordnet, dass die Faltkante durch die Falzwerkzeuge von der Linie L weg gekrümmt wird. Dies wird erreicht, indem die Falzflächen an der Falzstelle nicht parallel zur Linie L bzw. zur Bewegungsrichtung B der Falzstelle angeordnet sind, sondern schief dazu, derart, dass die Wirkungsrichtung K einer Presskraft, die senkrecht zu den Falzflächen steht, mit dem Pfeil B bzw. mit der Linie L einen spitzen Winkel α bildet. Je kleiner dieser Winkel α ist und je kleiner der Krümmungsradius der Faltkante, den die Falzwerkzeuge erzeugen, mit einer desto kleineren zusätzlichen Presskraft kann eine vorgegebene Falzqualität erreicht werden. Durch die Krümmung der Faltkante werden im Papier Spannungen erzeugt, die in ähnlicher Weise wirken wie Presskräfte. Aus diesem Grunde ist es je nach Papierqualität und Produktedicke ohne weiteres möglich, den Falzvorgang mit sehr kleinen Presskräften oder auch mit nur zugestellten und nicht pressenden Falzwerkzeugen durchzuführen.

**Figur 2a** zeigt eine Ausführungsform mit zwei zylindrischen Falzwerkzeugen W.1 und W.2, die beidseitig der Faltkante mit beispielsweise senkrecht zu dieser ausgerichteten (Anordnung wie Figur 1b), zueinander parallelen Achsen angeordnet sind. Die Falzflächen sind im wesentlichen die Berührungslinien der beiden Zylinder (und deren unmittelbare Umgebung) mit einer Tangentialebene (nicht dargestellt), die senkrecht auf der Verbindungslinie der beiden Zylinderachsen steht, wobei diese Verbindungslinie die Wirkungsrichtung K einer Presskraft darstellt. Wenn die beiden Werkzeuge in Richtung der Faltkante (Linie L) voneinander beabstandet angeordnet sind, steht die Wirkungsrichtung K der Presskraft nicht senkrecht zur Linie L bzw. zur Bewegungsrichtung B, sodass die Faltkante zwischen den Falzwerkzeugen nicht nur gepresst, sondern auch von der Linie L weg gekrümmt wird. Je nach Anordnung und Steifheit des Produktes wird der noch nicht gefalzte Teil der Faltkante, wie bereits erwähnt, durch die Krümmung einen Winkel zur Linie L bilden (F.1), nach einer entgegengesetzten Krümmung im wesentlichen parallel zu dieser (F'.1) oder auf der Linie L (F''.1) verlaufen. Für das Falzen ist nur die örtliche Krümmung der Faltkante zwischen den Falzwerkzeugen relevant. Der Verlauf des noch nicht gefalzten Teils der Faltkante ist nicht von Bedeutung.

Die beiden zylinderförmigen Falzwerkzeuge können frei oder angetrieben um ihre Achsen drehbar oder relativ zu den Achsen unbeweglich angeordnet sein. Sind die Werkzeuge drehbar, rollen sie während der Bewegung entlang der Faltkante auf dem Druckprodukt ab, sind sie nicht drehbar, rutschen sie auf diesem, wobei dann die Falzflächen auch als schmale, ebene Flächen ausgebildet sein können.

**Figur 2b** zeigt ein Paar von Falzwerkzeugen, von denen das eine (W.1) als quasi stationäre Gegenfläche ausgebildet, das andere (W.2) zylinderförmig und drehbar ist. Die quasi stationäre Gegenfläche ist schief zur Linie L bzw. Bewegungsrichtung B angeordnet, derart, dass wiederum die Wirkungsrichtung der Presskraft (Linie K) einen spitzen Winkel a mit der Linie L bildet. Das drehbare Werkzeug rollt auf der zu falzenden Kante ab, während diese auf der Falzfläche des quasi stationären Werkzeuges rutscht.

**Figur 2c** zeigt noch eine aus der Ausführungsform der Figur 2b durch Vereinfachung abgeleitete Ausführungsform der Falzwerkzeuge. Während das eine Werkzeug W.2 wiederum zylindrisch ist und beispielsweise in Richtung des Pfeiles B über die Faltkante F abrollt, ist das andere Falzwerkzeug W.1 eine gegenüber dem Produkt stationäre, parallel zu diesem verlaufende Gegenfläche, die sich also relativ zum Produkt nicht bewegt. Mit dieser Ausführungsform wird, da die Wirkungsrichtung K der Presskraft senkrecht zur Bewegungsrichtung B des sich bewegenden Werkzeuges W.2 gerichtet ist, die Faltkante des Produktes nur gepresst nicht aber gekrümmt, was mit vergleichbaren Presskräften zu einem weniger scharfen Falz führt.

**Figur 2d** zeigt ein Paar von nicht drehbaren Falzwerkzeugen (W.1, W.2), deren Wirkung sich mit dem Falzen mit einem Falzbein (Werkzeug W.2) auf einer ebenen Unterlage (Werkzeug W.1) vergleichen lässt. Im Unterschied zu diesem Vorgang wird aber das Falzbein (Werkzeug W.2) in einer Richtung B bewegt, die nicht parallel zur Unterlagefläche (Werkzeug W.1) gerichtet ist. Dadurch wird erreicht, dass die Faltkante durch die Werkzeuge um das Falzbein (Werkzeug W.2) gekrümmt wird, sodass auch in diesem Fall eine zusätzliche Presswirkung sehr klein sein oder ganz wegfallen kann.

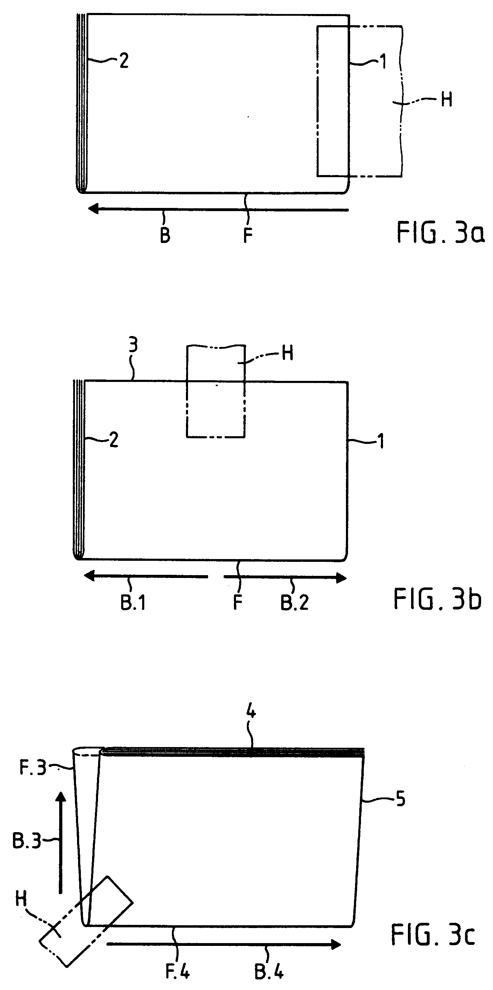

Da die Falzwerkzeuge, wenn sie über das Produkt nicht angetrieben rollen oder rutschen, durch ihre Bewegung eine Zugkraft auf das Druckprodukt ausüben, muss das Druckprodukt mindestens während dem Falzvorgang mit Haltemitteln festgehalten werden. Dabei werden die Bewegung der Falzwerkzeuge und die Haltemittel derart aufeinander abgestimmt, dass die Druckprodukte durch das Falzen nicht beschädigt werden können. Die Bewegung der Falzwerkzeuge wird vorteilhafterweise derart eingerichtet, dass der Falzvorgang an der Faltkante möglichst da endet, wo die Faltkante an eine weitere Produktekante stösst, an der die einzelnen Lagen des Druckproduktes gegeneinander beweglich sind. Verschiedene Beispiele, wie Druckprodukte während dem erfindungsgemässen Falzverfahren gehalten werden können, sind in den Figuren 3a bis 3c dargestellt.

**Figur 3a** zeigt ein einmal gefaltetes Druckprodukt mit einer Faltkante F, das beispielsweise aus mehreren mittig gefalteten Bogen besteht. Das Produkt kann beispielsweise, wie schematisch dargestellt, mit einem Haltemittel H entlang einer Kante 1 gehalten werden, die an die Faltkante F grenzt. Die Faltkante wird dann vom Haltemittel H weg gegen die der gehaltenen Kante gegenüberliegende Kante 2 gefalzt (Pfeil B). Sollte durch das Falzen beispielsweise die äusserste Lage des Produktes leicht deformiert werden, wird dies eine leichte Verschiebung der Kanten der einzelnen Lagen des Produktes an der Kante 2 ergeben, was ohne weiteres tolerierbar ist.

**Figur 3b** zeigt wieder ein einmal gefaltetes Druckprodukt, das an der der Faltkante F gegenüberliegenden Kante mittig gehalten wird. Um nun während dem Falzen asymmetrisch zum Haltemittel H auf das Druckprodukt wirkende Kräfte zu vermeiden, werden zwei Paare von Falzwerkzeugen eingesetzt, die sich entsprechend den Pfeilen B.1 und B.2 über die Faltkante F bewegen. Der Falzvorgang braucht auf diese Art weniger Zeit und eventuell entstehende Deformationen werden sich an beiden an die Faltkante grenzenden Kanten 1 und 2 auswirken, was die Wirkung gegenüber der Ausführungsform gemäss Figur 3a um die Hälfte kleiner und dadurch noch weniger relevant macht.

Mit gleicher Wirkung könnte das in der Figur 3b dargestellte Produkt auch in der Mitte der zu falzenden Faltkante F gehalten werden.

**Figur 3c** zeigt schliesslich einen Zweifalz, also ein zweimal gefaltetes Druckprodukt, das eine erste Faltkante F.3 (erster Falz) und eine daran grenzende, zweite Faltkante F.4 (zweiter Falz) aufweist. Um die beiden Faltkanten zu falzen, ist es besonders wichtig, dies mit einer Bewegung B.3, B.4 der Falzwerkzeuge gegen die offenen Kanten 4 und 5 zu tun, denn eine auch nur leichte Verformung der äussersten Lage des Produktes würde bei entgegengesetzter Bewegung der Werkzeuge zu Querfalten im Bereiche der Produkteecke zwischen den beiden Faltkanten (F.3 und F.4) führen. Aus diesem Grunde muss das Haltemittel H wie dargestellt in eben dieser Ecke angeordnet sein, es sei denn, die beiden Faltkanten werden eine nach der anderen gefalzt, wobei ein Haltemittel zuerst an der anderen, dann an der einen angreift.

In derselben Art wie Ein- oder Zweifalze können auch Produkte, die mehr als zwei Mal gefaltet sind, gefalzt werden. Dabei kommt es nicht darauf an, wie stark gefaltet die Produkte vor dem Falzvorgang sind. Es ist auch vorstellbar, dass die Produkte nicht eigentlich gefaltet, sondern lediglich derart festgehalten sind, dass eine zu falzende Faltkante genau definiert ist. Dies ist beispielsweise bei Bogen der Fall, von denen zwei einander gegenüberliegende Kanten zusammen festgehalten werden, derart, dass der Bogen entlang einer zu diesen Kanten parallelen Mittellinie gebogen oder quasi gefaltet ist, derart, dass diese Mittellinie als Faltkante oder zu falzende Kante genau definiert ist.

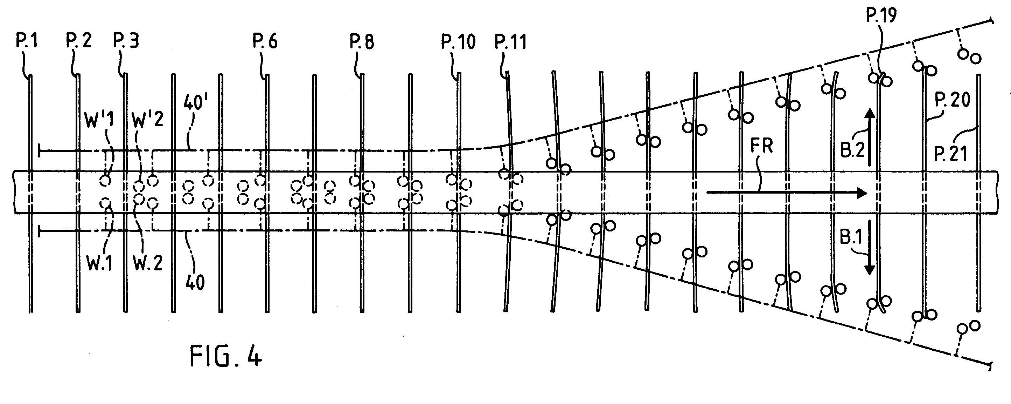

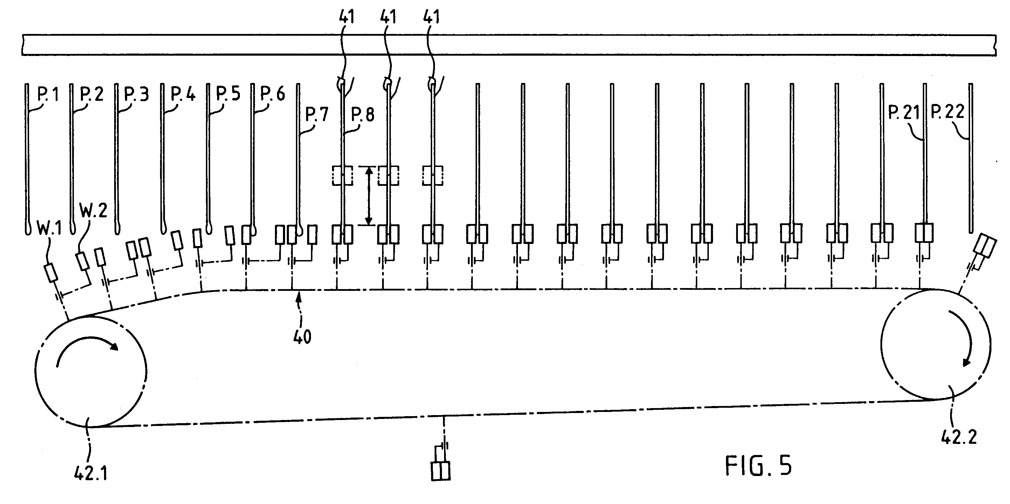

**Figuren 4 und 5** zeigen nun eine beispielhafte Ausführungsform der erfindungsgemässen Vorrichtung, mit der Faltkanten von kontinuierlich geförderten Druckprodukten nach dem erfindungsgemässen Verfahren gefalzt werden. Die Druckprodukte, Ein- oder Mehrfalze, werden von Haltemitteln, die gleichzeitig Fördermittel sind, in der in der Figur 3b gezeigten Weise oben festgehalten und mit der Faltkante gegen unten hängend gefördert, während sich zwei Paare von Falzwerkzeugen von der Mitte der zu falzenden Kante gegen deren Enden bewegen. Die Falzwerkzeuge sind wie in der Figur 2a dargestellt, als Paare von zylindrischen, um ihre Achse drehbaren Falzrollen ausgestaltet.

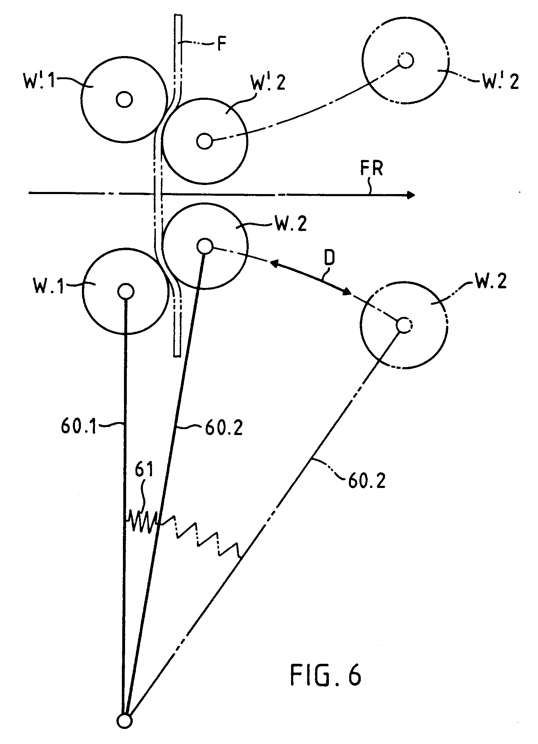

**Figur 4** zeigt die Vorrichtung als Draufsicht, wobei die von mittig angeordneten (nicht dargestellten) Halte- und Fördermitteln (41, Figur 5) festgehaltenen oberen Kanten der Druckprodukte P.1 bis P.21 sichtbar sind. Die Produkte werden kontinuierlich in Richtung des Pfeiles FR gefördert; die Figur stellt eine Momentaufnahme dar, in der die Produkte P.3 bis P.20 sich auf der Falzstrecke befinden. Im Bereiche der Produkte P.2 und P.3 werden von unten, im mittleren Bereiche der Faltkanten für jedes Produkt zwei Falzwerkzeugpaare (W.1/W.2, W'.1/W'.2) gegen die Produkte geführt, wobei die zwei Werkzeuge eines Paares einen derartigen Abstand voneinander haben, dass sie problemlos in den Förderstrom eingeführt werden können. Im Bereiche des Produktes P.6 sind die Falzwerkzeugpaare im Bereiche der Faltkanten positioniert und werden nun zusammengeführt (siehe Detail in Figur 6). Im Bereiche des Produktes P.8 sind die Werkzeuge jedes Paares an der Faltkante positioniert und können diese zusammenpressen. Bei Produkt P.10 beginnen die die Faltkante örtlich krümmenden und/oder pressenden Werkzeugpaare (W.1/W.2, W'.1/W'.2) sich voneinander weg zu bewegen, das heisst, ihrer Bewegung in Förderrichtung FR wird eine Bewegung in Richtung B.1 bzw. B.2 überlagert. Sie erreichen bei Produkt P.20 die beiden Enden der Faltkante und werden seitlich der Produkte (P.21) weggeführt.

Die Paare von Falzwerkzeugen sind mit gleichmässigen Abständen an einem Transportmittel 40 bzw. 40', beispielsweise an zwei entsprechend geführten Transportketten angebracht, die in der Figur schematisch mit je einer strichpunktierten Linie angedeutet sind.

**Figur 5** zeigt die Vorrichtung gemäss Figur 4 als Seitenansicht. Darauf sind die Druckprodukte P.1 bis P.22 von einer seitlichen Kante gesehen. An den Produkten P.8 bis P.10 sind schematisch Halte-/Fördermittel 41 in Form von Klammern dargestellt, die die Produkte an ihren oberen Kanten festhalten und transportieren, während die Faltkanten frei nach unten hängen.

Von den Falzwerkzeugpaaren sind nur diejenigen der einen Seite sichtbar (W.1/W.2). Die Paare sind wie bereits erwähnt mit gleichen Abständen, die im wesentlichen auch gleich gross sind wie die Abstände zwischen den Haltemitteln 41, auf einer Transportkette 40 angebracht. Die Transportkette ist endlos und wird durch zwei Umlenkrollen 42.1 und 42.2 in der durch die entsprechenden Pfeile angegebenen Richtung und mit im wesentlichen derselben Geschwindigkeit, mit der die Haltemittel 41 bewegt werden, angetrieben, derart, dass die Falzwerkzeugpaare im wesentlichen synchron zu den Halte/Fördermitteln bewegt werden. Durch entsprechende Führungsmittel (nicht dargestellt) werden die beiden Transportketten 40 und 40' auf der in den Figuren 4 und 5 dargestellten Bahn (strichpunktierte Linien) gehalten.

In der Figur 5 ist deutlich sichtbar, wie die Falzwerkzeugpaare im Bereiche der Produkte P.2 bis P.6 von unten in den Förderstrom der Produkte eingeführt und im Bereiche der Faltkanten der Produkte positioniert werden, wobei die Falzwerkzeuge eines Paares voneinander beabstandet sind. Die Bewegung der Falzwerkzeugpaare ist dabei beispielsweise derart mit der Bewegung der Haltemittel 41 koordiniert, dass das eine (W.1) der Falzwerkzeuge eines Paares unmittelbar am Produkt anliegt, sodass für die Positionierung zum Falzen nur das andere (W.2) bewegt werden muss (siehe Detail Figur 6).

Im Bereiche der Produkte P.6 bis P.8 werden die Falzwerkzeuge des Paares zum Falzen positioniert und gegeneinander gepresst, und in dieser Position über den Rest der Falzstrecke auf einer aus der Figur 4 ersichtlichen Bahn bewegt, wobei sie die Faltkanten falzen. Im Bereiche des Produktes P.21 haben die beiden entsprechenden Falzwerkzeugpaare die Ende der Faltkante erreicht und werden seitlich vom Produkt weiter bis zur Umlenkrolle 42.2 geführt, von wo sie den Retourtrum antreten.

Im Bereiche der Produkte P.8 bis P.10 sind die Falzwerkzeuge strichpunktiert noch in einer zweiten Position dargestellt, mit der angedeutet werden soll, dass die Falzwerkzeuge derart an der Transportkette 40 befestigt sein können, dass ihr Abstand von dieser einstellbar ist. Dadurch kann die Vorrichtung einfach an verschiedene Formate von Druckprodukten adaptiert werden. Eine gleiche Adaptierbarkeit kann auch erreicht werden, wenn die gesamte, die Falzwerkzeuge tragende Transporteinrichtung derart verstellbar ausgestaltet ist, dass ihr Abstand zum Transportmittel der Produkte einstellbar ist.

Für beschränkt breitere oder schmalere Produkte (Ausmass quer zur Transportrichtung) muss die Vorrichtung nicht adaptiert werden. Der Falzvorgang dauert entsprechend länger oder weniger lang.

**Figur 6** zeigt nun als Detail die Relativbewegung der beiden Falzwerkzeuge W.1 und W.2 bzw. W'.1 und W'.2 eines Paares. Es handelt sich dabei um eine Draufsicht wie Figur 4 und ist in dieser im Bereiche der Produkte P.6 bis P.8 ebenfalls dargestellt. Die beiden Falzwerkzeuge W.1 und W.2 eines Paares sind beispielsweise an gegeneinander schwenkbaren Hebeln 60.1 und 60.2 angeordnet (Doppelpfeil D), wobei sie durch eine Feder 61 in eine Position (Falzposition, ausgezogen dargestellt) gedrückt werden, in der die beiden Werkzeuge sich berühren und in der sie beispielsweise durch die Feder mit einer Presskraft aneinander gedrückt werden. Durch eine Steuerkulisse (nicht dargestellt), die beispielsweise am von der Faltkante abgewendeten Ende der Werkzeuge angreift, werden die beiden Werkzeuge gegen die Kraft der Feder 61 in eine voneinander beabstandete Position (Ruheposition, strichpunktiert dargestellt) geführt, darin gehalten oder wieder in die Falzposition geführt.

Die Steuerkulisse ist derart anzuordnen, dass die Falzwerkzeuge vor ihrer Einführung in den Förderstrom voneinander getrennt (Ruheposition) werden, also irgendwo im Bereiche des Retourtrums der Falzwerkzeugpaare oder im Bereiche der Umlenkung (42.1, Figur 5) vor der Einführung, sodass die Falzwerkzeuge während ihrer Einführung in den Förderstrom in der voneinander beabstandeten Ruheposition bleiben und dass sie, wenn sie ihre relative Position zur zu falzenden Faltkante erreicht haben, in die Falzposition zurückgeführt werden, also in der Figur 4 und 5 im Bereiche der Produkte P.6 bis P.8.

Es ist aus der Figur 6 auch nochmals klar ersichtlich, wie die zu falzende Faltkante F von den Falzwerkzeugen gekrümmt wird.

Die Transportkette, die die Falzwerkzeugpaare antreibt, die Befestigung der Falzwerkzeugpaare an dieser Transportkette und der Mechanismus der Verbindung der beiden Falzwerkzeuge eines Paares mit der entsprechenden Steuerkulisse sind für einen Fachmann leicht realisierbar und sind deshalb hier nicht im Detail dargestellt und beschrieben.

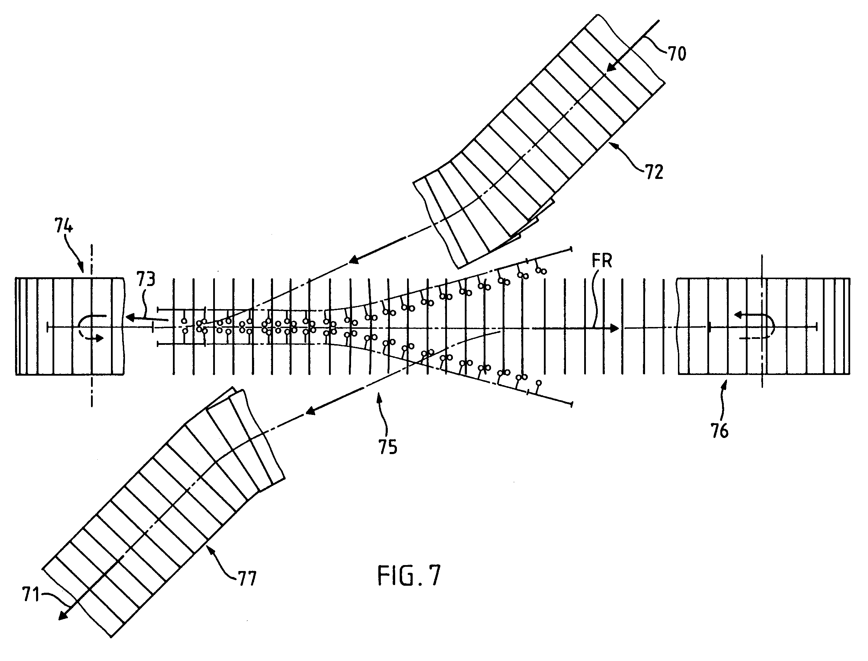

**Figur 7** zeigt noch schematisch, wie die beispielhafte Ausführung der erfindungsgenmässen Vorrichtung gemäss Figuren 4 und 5 beispielsweise in eine Transportstrecke für Druckprodukte in Schuppenformation eingegliedert werden kann, ohne dass diese dadurch merklich verlängert oder in eine bestimmte Richtung umgelenkt werden müsste. Die Figur ist eine Draufsicht wie die Figur 4. Im Zentrum ist die Vorrichtung gemäss Figur 4 mit der Bezugsnummer 75 zu erkennen. Die Förderrichtung der Transportstrecke ist im wesentlichen die Richtung der Pfeile 70 und 71, die die Richtung der Zuführung der Produkte und deren Abführung bezeichnen.

Die Druckprodukte werden mit einem Fördermittel als Schuppenstrom 72 mit obenliegenden, vorlaufenden zu falzenden Faltkanten zugeführt. Der Schuppenstrom 72 wird übergeben und umgelenkt in eine neue Förderrichtung 73, die zur Förderrichtung 70 der Zuführung einen spitzen Winkel bildet, und dann um 180° gegen unten (74) gewendet, wodurch die Faltkanten auf die Unterseite des Stromes zu liegen kommen. Die nun obenliegenden, den Faltkanten gegenüberliegenden Kanten der Produkte werden erfasst und die Produkte so in hängender Lage in einer der Transportrichtung 73 entgegengesetzten Richtung FR durch die Falzvorrichtung gemäss Figuren 4 und 5 (75) gefördert, während die frei nach unten hängenden Faltkanten nach dem erfindungsgemässen Verfahren gefalzt werden. Nach der Falzstrecke werden die Faltkanten der Produkte durch entsprechende Mittel gelenkt, derart, dass wieder ein Schuppenstrom mit vorlaufenden, obenliegenden Faltkanten entsteht. Dies geschieht durch eine Umlenkung um 180° nach oben (76) in einen Schuppenstrom 77, dessen Richtung der ursprünglichen Richtung 71 des eingeführten Schuppenstromes 72 entspricht.

Der aus der Anordnung ausgeführte Schuppenstrom 77 unterscheidet sich von dem in die Anordnung eingeführten Schuppenstrom 72 lediglich durch die gefalzten Faltkanten.

Die im Zusammenhang mit den Figuren 4, 5 und 6 beschriebene, beispielhafte Ausführungsform der erfindungsgemässen Vorrichtung ist beispielsweise anwendbar nach einem Einsteck- oder Sammelprozess, aus dem die Endprodukte beispielsweise hängend abgeführt werden. Eine Anordnung entsprechend der Figur 7 ist beispielweise anwendbar im Bereiche des Ausganges einer Rotationspresse, die einen Schuppenstrom auslegt.

Die im Zusammenhang mit den Figuren 4, 5, 6 und 7 beschriebene Ausführungsform der erfindungsgemässen Vorrichtung ist beispielhaft. Weder die hängende Lage der Produkte noch der im wesentlichen horizontale Verlauf der Falzstrecke, noch die Anordnung der Falzwerkzeuge ist zwingend.

In derselben Weise wie einzelne Druckprodukte nach dem erfindungsgemässen Verfahren und mit der erfindungsgemässen Vorrichtung gefaltet werden können, können auch Gruppen von Druckprodukten, deren zu falzende Faltkanten übereinander liegen, wie ein Produkt gefalzt werden.

## Patentansprüche

1. Verfahren zum Falzen von Faltkanten (F) an Produkten (P) aus Papier, insbesondere an gefalteten Druckprodukten, wobei die Faltkanten (F) entweder vorgefaltet oder als zu falzende Kanten eindeutig definiert sind, in welchem Verfahren je ein Falzwerkzeug von mindestens einem Paar von Falzwerkzeugen (W.1/W.2) mit Falzflächen auf je einer Seite der Faltkante derart positioniert wird, dass die einander gegenüberliegenden Falzflächen der beiden Falzwerkzeuge im Bereiche der Faltkante auf das Produkt wirken, wobei die Falzflächen der Falzwerkzeuge eines Paares mindestens entlang einer Falzlinie (C) auf das Produkt wirken und die Falzlinie (C) eine Linie (L), auf der die zu falzende Faltkante (F) angeordnet ist, an einer Falzstelle schneidet, und in welchen Verfahren die Falzstelle durch eine entsprechende Relativbewegung zwischen Produkt (P) und mindestens einem der Falzwerkzeuge (W.1, W.2) in einer Bewegungsrichtung (B), die parallel zur Linie (L) gerichtet ist, entlang der Faltkante (F) bewegt wird, **dadurch gekennzeichnet**, dass die Produkte während dem Falzvorgang durch Haltemittel (H) festgehalten werden, dass die Haltemittel gleichzeitig Fördermittel (41) sind, mit denen die Produkte kontinuierlich in einer Förderrichtung (FR) über eine Förderstrecke gefördert werden, und dass die Falzwerkzeuge über einen Teil der Förderstrecke in Förderrichtung (FR) mitbewegt werden, wobei diese Bewegung mindestens für ein Falzwerkzeug durch eine Bewegung in der genannten Richtung (B) überlagert wird.

2. Verfahren nach Anspruch 1, **dadurch gekennzeichnet**, dass die Falzlinie (C) die Linie (L) senkrecht schneidet oder mit einem spitzen Winkel (β) derart schief, dass der gegen das Produkt gerichtete Teil der Falzlinie (C) in Bewegungsrichtung (B) vorlaufend ist.

3. Verfahren nach Anspruch 1, **dadurch gekennzeichnet**, dass die Faltkante (F) durch die Falzflächen der Falzwerkzeuge (W.1, W.2) im Bereiche der Falzstelle gekrümmt wird, dadurch, dass eine Senkrechte (K) auf die Falzflächen an der Falzstelle zusammen mit der Bewegungsrichtung (B) der Falzstelle einen spitzen Winkel (α) bildet.

4. Verfahren nach einem der Ansprüche 1 oder 2, **dadurch gekennzeichnet**, dass die Faltkante (F) an der Falzstelle gepresst wird, dadurch dass die Falzflächen der Falzwerkzeuge (W.1, W.2) mit einer Presskraft gegeneinander gepresst werden.

5. Verfahren nach einem der Ansprüche 1 bis 4, **dadurch gekennzeichnet**, dass mindestens eines der Falzwerkzeuge (W.1, W.2) eines Paares auf dem Produkt (P) bzw. auf dessen Faltkante (F) frei oder angetrieben abrollt.

6. Verfahren nach einem der Ansprüche 1 bis 5, **dadurch gekennzeichnet**, dass die Produkte im Bereiche einer Kante (1), die an die zu falzende Faltkante (F) stösst, festgehalten werden und dass die Falzwerkzeuge von der gehaltenen Kante (1) weg über die Faltkante (F) bewegt werden.

7. Verfahren nach einem der Ansprüche 1 bis 5, **dadurch gekennzeichnet**, dass die Produkte in einem mittleren Bereiche einer Kante (3), die der zu falzenden Faltkante (F) gegenüber liegt, oder in einem mittleren Bereiche der zu falzenden Faltkante (F) festgehalten werden und dass zwei Paare von Falzwerkzeugen gleichzeitig von der Mitte dieser Faltkante (F) je gegen eines ihrer Enden bewegt werden.

8. Verfahren nach eionem der ansprüche 1 bis 5, **dadurch gekennzeichnet**, dass die Produkte zwei zu falzende Faltkanten (F.3, F.4), die in einer Produkteecke aneinander stossen, aufweisen, dass die Produkte im Bereiche dieser Ecke festgehalten werden und dass gleichzeitig über beide Faltkanten Paare von Falzwerkzeugen von der festgehaltenen Ecke weg bewegt werden.

9. Verfahren nach Anspruch 7, **dadurch gekennzeichnet**, dass die Produkte als Schuppenstrom (72) mit obenliegenden, vorlaufenden, zu falzenden Faltkanten von einer Förderrichtung (70) in eine weitere Förderrichtung (73) umgelenkt und übergeben werden, dass dann der Schuppenstrom (72) derart umgelenkt wird (74), dass die zu falzenden Faltkanten im Strom gegen unten gerichtet sind und in einer der weiteren Förderrichtung (73) entgegengesetzten Richtung (FR) hängend gefördert werden, wobei ihre zu falzenden Faltkanten durch je zwei Paare von Falzwerkzeugen gefalzt werden, dass dann die gefalzten Faltkanten der Produkte gegenüber den gehaltenen Kanten so geführt werden und der Strom so umgelenkt wird, dass die gefalzten Faltkanten nach oben zu liegen kommen, und der Schuppenstrom (77) in eine der Förderrichtung (70) entsprechende Förderrichtung (71) umgelenkt und übergeben wird.

10. Verfahren nach einem der Ansprüche 1 bis 9, **dadurch gekennzeichnet**, dass die Produkte (P) Gruppen von gefalteten Druckprodukten sind, deren zu falzende Faltkanten aufeinander angeordnet sind.

11. Vorrichtung zur Durchführung des Verfahrens nach einem der Ansprüche 1 bis 10, welche Vorrichtung mindestens ein Paar von Falzwerkzeugen (W.1/W.2) mit Falzflächen aufweist, wobei je eines der Falzwerkzeuge auf jeder Seite einer zu falzenden Kante (F) eines Produktes (P) derart positionierbar ist, dass die Falzflächen der beiden Falzwerkzeuge an einer Falzstelle im Bereiche der Faltkante auf das Produkt wirken , **dadurch gekennzeichnet**, dass die Vorrichtung zusätzlich mindestens ein als Fördermittel ausgebildetes Haltemittel (H) zum Festhalten und kontinuierlichen Fördern eines Produktes (P) aufweist, und dass Haltemittel (H) und Falzwerkzeuge (W.1, W.2) derart relativ zueinander bewegbar sind, dass die Falzstelle in einer Bewegungsrichtung (B) parallel zu einer Linie (L), auf der die zu falzende Faltkante (F) angeordnet ist, verschiebbar ist.

12. Vorrichtung nach Anspruch 11, **dadurch gekennzeichnet**, dass die Falzfläche von mindestens einem Falzwerkzeug (W.2) eines Paares derart gekrümmt ist, dass die Wirkung des Falzwerkzeuges auf das Produkt entlang einer Falzlinie (C) erfolgt.

13. Vorrichtung nach Anspruch 12, **dadurch gekennzeichnet**, dass das Paar von Falzwerkzeugen derart angeordnet ist, dass die Falzlinie (C) senkrecht zur Linie (L) steht oder dass sie mit dieser einen spitzen Winkel (β) bildet, derart, dass der dem Produkt zugewandte Teil der Linie (C) in Bewegungsrichtung (B) vorlaufend ist.

14. Vorrichtung nach Anspruch 11, **dadurch gekennzeichnet**, dass das Paar von Falzwerkzeugen derart angeordnet ist, dass eine Senkrechte (K) auf die Falzflächen an der Falzstelle senkrecht oder schief auf der Linie (L) steht.

15. Vorrichtung nach einem der Ansprüche 11 bis 14, **dadurch gekennzeichnet**, dass mindestens eines (W.2) der Falzwerkzeuge des Paares zylinderförmig und frei oder antreibbar um seine Achse drehbar ist.

16. Vorrichtung nach Anspruch 15, **dadurch gekennzeichnet**, dass das andere (W.1) der Falzwerkzeuge des Paares ebenfalls zylinderförmig ist oder als quasi stationäre Gegenfläche ausgebildet ist.

17. Vorrichtung nach einem der Ansprüche 11 bis 16, **dadurch gekennzeichnet**, dass sie eine Mehrzahl von Haltemitteln (41) aufweist, die über eine Förderstrecke in einer Förderrichtung (FR) bewegbar sind und dass sie eine Mehrzahl von Paaren von Falzwerkzeugen aufweist, wobei die Paare von Falzwerkzeugen mindestens über einen Teil der Förderstrecke im wesentlichen synchron mit den Haltemitteln (41) in Förderrichtung bewegbar sind.

18. Vorrichtung nach Anspruch 17, **dadurch gekennzeichnet**, dass jedem Haltemittel (41) ein oder mehrere Paare von Falzwerkzeugen zugeordnet sind.

19. Vorrichtung nach Anspruch 17 oder 18, **dadurch gekennzeichnet**, dass die Haltemittel (41) die Greifer einer Greiferkette sind.

20. Vorrichtung nach einem der Ansprüche 17 bis 19, **dadurch gekennzeichnet**, dass die Paare von Falzwerkzeugen auf mindestens einer Transportkette (40, 40') angeordnet sind mit einem Abstand voneinander, der dem Abstand der Haltemittel voneinander im wesentlichen entspricht.

21. Vorrichtung nach einem der Ansprüche 11 bis 20, **dadurch gekennzeichnet**, dass die beiden Falzwerkzeuge (W.1, W.2) eines Paares an gegeneinander verschwenkbaren Hebeln (60.1, 60.2) angeordnet sind, dass sie durch eine Feder (60) in einer Falzposition gehalten werden, in der sie sich gegenseitig oder eine dazwischen angeordnete Faltkante beidseitig berühren, und dass Steuermittel vorgesehen sind, mit denen die Falzwerkzeuge gegen die Federkraft in eine voneinander beabstandete Ruheposition bringbar sind.

## Claims

1. Method for folding fold edges (F) on products (P) made of paper, in particular on folded printed products, the fold edges (F) being either pre-folded or clearly defined as edges to be folded, in which method one folding tool each of at least one pair of folding tools (W.1/W.2) is positioned with folding faces on each side of the fold edge in such a way that the mutually opposite folding faces of the two folding tools act on the product in the region of the fold edge, the folding faces of the folding tools of a pair acting on the product at least along one folding line (C) and the folding line (C) intersecting a line (L), on which the fold edge (F) to be folded is arranged, at a folding point, and in which method the folding point is moved along the fold edge (F) by means of an appropriate relative movement between product (P) and at least one of the folding tools (W.1, W.2) in a direction of movement (B) that is directed parallel to the line (L), characterized in that, during the folding operation, the products are firmly held by holding means (H), in that the holding means are at the same time conveying means (41), with which the products are conveyed continuously over a conveying section in a conveying direction (FR), and in that the folding tools are moved concomitantly over part of the conveying section in the conveying direction (FR), this movement, at least for one folding tool, having superimposed on it a movement in the said direction (B).

2. Method according to Claim 1, characterized in that the folding line (C) intersects the line (L) perpendicularly or obliquely at an acute angle (β) in such a way that the part of the folding line (C) that is directed towards the product leads in the direction of movement (B).

3. Method according to Claim 1, characterized in that the fold edge (F) is curved by the folding faces of the folding tools (W.1, W.2) in the region of the folding point as a result of the fact that a perpendicular (K) to the folding faces at the folding point forms, together with the direction of movement (B) of the folding point, an acute angle (α).

4. Method according to one of Claims 1 or 2, characterized in that the fold edge (F) is pressed at the folding point as a result of the fact that the folding faces of the folding tools (W.1, W.2) are pressed against each other with a pressing force.

5. Method according to one of Claims 1 to 4, characterized in that at least one of the folding tools (W.1, W.2) of a pair rolls in a free or driven manner on the product (P) or on its fold edge (F).

6. Method according to one of Claims 1 to 5, characterized in that the products are firmly held in the region of an edge (1) which abuts the fold edge (F) to be folded, and in that the folding tools are moved over the fold edge (F), away from the held edge (1).

7. Method according to one of Claims 1 to 5, characterized in that the products are firmly held in a central region of an edge (3) which lies opposite the fold edge (F) to be folded, or are firmly held in a central region of the fold edge (F) to be folded, and in that two pairs of folding tools are moved simultaneously from the centre of this fold edge (F), each towards one of the ends of the said fold edge.

8. Method according to one of Claims 1 to 5, characterized in that the products have two fold edges (F.3, F.4) to be folded, these edges abutting each other at a product corner, in that the products are firmly held in the region of this corner, and in that the pairs of folding tools are moved simultaneously over both fold edges, away from the firmly held corner.

9. Method according to Claim 7, characterized in that the products are deflected and transferred from one conveying direction (70) into a further conveying direction (73) as an imbricated stream (72) with the fold edges to be folded located at the top and leading, in that the imbricated stream (72) is then deflected (74) in such a way that the fold edges to be folded are directed downwards in the stream and are conveyed in a suspended manner in a direction (FR) opposite to the further conveying direction (73), their fold edges to be folded being folded by two pairs each of folding tools, in that the folded fold edges of the products are guided with respect to the held edges, and the stream is deflected, both in such a way that the folded fold edges come to lie at the top and the imbricated stream (77) is deflected and transferred in a conveying direction (71) that corresponds to the conveying direction (70).

10. Method according to one of Claims 1 to 9, characterized in that the products (P) are groups of folded printed products whose fold edges to be folded are arranged on one another.

11. Device for carrying out the method according to one of Claims 1 to 10, which device has at least one pair of folding tools (W.1/W.2) having folding faces, one each of the folding tools being able to be positioned on each side of an edge (F) to be folded of a product (P) in such a way that the folding faces of the two folding tools act on the product at a folding point in the region of the fold edge, characterized in that the device additionally has at least one holding means (H), designed as conveying means, for firmly holding and continuously conveying a product (P), and in that holding means (H) and folding tools (W.1, W.2) can be moved in relation to one another in such a way that the folding point can be displaced in a direction of movement (B) that is parallel to a line (L) on which the fold edge (F) to be folded is arranged.

12. Device according to Claim 11, characterized in that the folding face of at least one folding tool (W.2) of a pair is curved in such a way that the folding tool acts on the product along a folding line (C).

13. Device according to Claim 12, characterized in that the pair of folding tools is arranged in such a way that the folding line (C) is perpendicular to the line (L) or that it forms with the latter an acute angle (β) in such a way that the part of the line (C) that faces the product leads in the direction of movement (B).

14. Device according to Claim 11, characterized in that the pair of folding tools is arranged in such a way that a perpendicular (K) to the folding faces at the folding point is perpendicular or oblique with respect to the line (L).

15. Device according to one of Claims 11 to 14, characterized in that at least one (W.2) of the folding tools of the pair is cylindrical and can rotate in a free or driven manner about its axis.

16. Device according to Claim 15, characterized in that the other (W.1) of the folding tools of the pair is likewise cylindrical or is designed as a quasi-stationary mating face.

17. Device according to one of Claims 11 to 16, characterized in that it has a plurality of holding means (41) which can be moved over a conveying section in a conveying direction (FR), and in that it has a plurality of pairs of folding tools, the pairs of folding tools being able to be moved in the conveying direction essentially in synchronism with the holding means (41), at least over part of the conveying section.

18. Device according to Claim 17, characterized in that each holding means (41) is assigned one or more pairs of folding tools.

19. Device according to Claim 17 or 18, characterized in that the holding means (41) are the grippers of a gripper chain.

20. Device according to one of Claims 17 to 19, characterized in that the pairs of folding tools are arranged on at least one transport chain (40, 40') at a distance from one another that essentially corresponds to the distance of the holding means from one another.

21. Device according to one of Claims 11 to 20, characterized in that the two folding tools (W.1, W.2) of a pair are arranged on levers (60.1, 60.2) that can be pivoted in relation to each other, in that they are held by a spring (60) in a folding position in which they mutually touch or touch both sides of a fold edge arranged between them, and in that control means are provided with which the folding tools can be brought, counter to the spring force, into a rest position at a distance from each other.

## Revendications

1. Procédé pour la réalisation de pliures (F) sur des produits (P) en papier, notamment sur des produits imprimés pliés, les pliures (F) ayant ou bien subi un pliage préliminaire ou bien ayant été prédéfinies de manière précise, procédé au cours duquel, respectivement, un outil plieur, faisant partie d'au moins une paire de tels outils (W.1/W.2), ayant des faces de pliage, est positionné sur, respectivement, un côté de la pliure, de telle manière que les faces de pliage, mutuellement opposées des deux outils de ladite paire, agissent sur le produit dans la région de la pliure, lesdites faces de pliage des outils d'une même paire agissant sur le produit au moins le long d'une ligne de pliage (C) et cette ligne (C) coupant, en un point de pliage, une ligne (L) sur laquelle est disposée la pliure (F) à réaliser, et au cours duquel le point de pliure se déplace le long de la pliure (F) sous l'effet d'un mouvement réciproque entre le produit (P) et au moins l'un des outils (W.1, W.2) dans une direction (B) orientée parallèlement à ladite ligne (L), caractérisé en ce que les produits sont maintenus en place pendant l'opération de pliage par des moyens de maintien (H), en ce que ces moyens de maintien sont en même temps des moyens de transport (41) à l'aide desquels les produits sont transportés de manière continue dans une direction de transport (FR) le long d'un trajet de transport, et en ce que les outils plieurs sont entraînés en même temps sur une partie dudit trajet de transport dans la direction (FR) de celui-ci, tandis que, pour au moins un outil plieur, ce mouvement est supplanté par un mouvement dans la direction (B) mentionnée plus haut.

2. Procédé selon la revendication 1, caractérisé en ce que la ligne de pliage (C) coupe la ligne (L) perpendiculairement ou sous un angle aigu (β) de telle manière que la partie de la ligne (C) orientée en direction du produit avance en direction du mouvement (B).

3. Procédé selon la revendication 1, caractérisé en ce que la pliure (F) est courbée par les faces de pliage des outils (W.1, W.2) dans la région du point de pliage du fait qu'une perpendiculaire (K) des faces de pliage, au point de pliage, forme un angle aigu (α) avec la direction (B) du mouvement en ce point de pliage.

4. Procédé selon l'une des revendications 1 ou 2, caractérisé en ce que la pliure (F) est soumise à une pression au point de pliage du fait que les faces de pliage des outils (W.1, W.2) sont pressées l'une contre l'autre sous une force de pression.

5. Procédé selon l'une des revendications 1 à 4, caractérisé en ce qu'au moins l'un des outils plieurs (W.1, W.2) d'une paire roule, librement ou sous l'effet d'un moteur, sur le produit (P) à savoir sur sa pliure (F).

6. Procédé selon l'une des revendications 1 à 5, caractérisé en ce que les produits sont maintenus fixement dans la région d'un bord (1) qui bute contre la pliure (F) à réaliser et en ce que les outils plieurs se déplacent sur ladite pliure (F) en s'éloignant du bord (1).

7. Procédé selon l'une des revendications 1 à 5, caractérisé en ce que les produits sont maintenus fixement dans une zone centrale d'un bord (3) qui fait face à la pliure (F) à réaliser, ou bien dans une zone centrale de ladite pliure (F) et que deux paires d'outils plieurs se déplacent simultanément entre le centre de cette pliure (F) et respectivement l'une de ses extrémités.

8. Procédé selon l'une des revendications 1 à 5, caractérisé en ce que les produits présentent deux pliures à réaliser (F3, F4) qui butent l'une contre l'autre dans un angle du produit, en ce que les produits sont maintenus fixement dans la région de cet angle et en ce que des paires d'outils plieurs se déplacent simultanément sur les deux pliures en s'éloignant de cet angle maintenu fixement.

9. Procédé selon la revendication 7, caractérisé en ce que les produits formant un flux en cascade dont les pliures à réaliser sont placées en haut en position avancée sont dérivés d'une direction de transport (70) pour passer dans une autre direction de transport (73), que, ensuite, le flux en cascade (72) subit une dérivation (74) telle que les pliures à réaliser sont orientées vers le bas et transportées, en suspension, dans une direction (FR) opposée à l'une des autres directions (73), tandis que leurs pliures à réaliser subissent un pliage par deux paires d'outils plieurs respectivement, en ce qu'ensuite les pliures réalisées des produits sont conduites de telle manière par rapport aux bords ainsi maintenus, et le flux est dérivé de telle manière que les pliures réalisées viennent se placer en haut et que le flux en cascade (77) subit une dérivation et passe dans une direction (70) qui correspond à la direction de transport (71).

10. Procédé selon l'une des revendications 1 à 9, caractérisé en ce que les produits (P) sont des groupes de produits imprimés pliés dont les pliures à réaliser sont disposées en se superposant.

11. Dispositif pour la mise en oeuvre du procédé conforme à l'une des revendications 1 à 10, dispositif présentant au moins une paire d'outils plieurs (W.1/W.2) munis de faces de pliage, tandis que, respectivement, l'un des outils peut être positionné sur chaque côté d'une pliure (F) à réaliser d'un produit (P) de telle manière que les faces de pliage des deux outils agissent sur le produit en un point de pliage dans la région de ladite pliure, caractérisé en ce que ledit dispositif présente, en outre, au moins un moyen de maintien (H) réalisé sous la forme d'un moyen de transport destiné à maintenir fixement et à transporter de manière continue un produit (P), et que ledit moyen (H) et les outils (W.1, W2) sont mobiles réciproquement de telle sorte que le point de pliage peut se déplacer dans une direction (B) parallèlement à une ligne (L) sur laquelle est disposée la pliure (F) à réaliser.

12. Dispositif selon la revendication 11, caractérisé en ce que la face de pliage d'au moins un outil (W.2) d'une paire est recourbée de telle sorte que l'effet de cet outil sur le produit s'effectue le long d'une ligne de pliage (C).

13. Dispositif selon la revendication 12, caractérisé en ce que la paire d'outils de pliage est disposée de telle manière que la ligne de pliage (C) est placée perpendiculairement à la ligne (L) ou bien qu'elle forme un angle aigu (β) avec celle-ci, de façon que la partie de la ligne (C) orientée vers le produit s'approche de la direction du mouvement (B).

14. Dispositif selon la revendication 11, caractérisé en ce que la paire d'outils plieurs est disposée de telle manière qu'une perpendiculaire (K) des faces de pliage est perpendiculaire à la ligne (L) ou oblique par rapport à celle-ci au point de pliage.

15. Dispositif selon l'une des revendications 11 à 14, caractérisé qu'au moins l'un des outils (W.2) de la paire est de forme cylindrique et peut tourner librement sous l'effet d'un moteur autour de son axe.

16. Dispositif selon la revendication 15, caractérisé en ce que l'autre outil (W.1) de la paire est également de forme cylindrique et réalisé en contre face pratiquement fixe.

17. Dispositif selon l'une des revendications 11 à 16, caractérisé en ce qu'il présente une pluralité de moyens de maintien (41) qui sont mobiles sur un trajet de transport dans une direction de transport (FR) et qu'il présente une pluralité de paires d'outils plieurs, lesdites paires d'outils plieurs étant mobiles dans la direction du transport au moins sur une partie du trajet du transport de manière sensiblement synchrone avec les moyens de maintien (41).

18. Dispositif selon la revendication 17, caractérisé en ce qu'à chaque moyen de maintien (41) sont associées une seule ou plusieurs paires d'outils plieurs.

19. Dispositif selon la revendication 17 ou 18, caractérisé en ce que les moyens de maintien (41) sont les grappins d'une chaîne à grappins.

20. Dispositif selon l'une des revendications 17 à 19, caractérisé en ce que les paires d'outils plieurs sont disposées sur au moins une chaîne de transport (40, 40') à une distance réciproque qui correspond sensiblement à la distance réciproque entre les moyens de maintien.

21. Dispositif selon l'une des revendications 11 à 20, caractérisé en ce que les deux outils plieurs (W.1, W.2) d'une paire sont disposés sur des leviers (60.1, 60.2) pouvant basculer les uns contre les autres, en ce qu'ils sont maintenus par un ressort (60) dans un position de pliage dans laquelle ils se touchent réciproquement ou bien touchent une pliure disposée entre eux, et en ce que des moyens de commande sont prévus à l'aide desquels les outils plieurs, en s'opposant à la force d'un ressort, peuvent être amenés dans une position d'écartement l'un de l'autre, à savoir une position de repos.
